# FASCICULE DE BREVET EUROPEEN

(11) **EP 3 743 930 B1**
(45) Date de publication et mention de la délivrance du brevet: **18.08.2021**
(21) Numéro de dépôt: 19705566.8
(22) Date de dépôt: 18.01.2019
(51) Int. Cl.: H01F 7/02, H02K 1/27

(54) **AIMANT UNITAIRE AVEC FORMES EN RETRAIT DESTINÉES À FAIRE PARTIE DE ZONES DE CONTACT ENTRE DES AIMANTS ADJACENTS**
EINHEITLICHER MAGNET MIT VERTIEFTEN FORMEN ZUR BILDUNG EINES TEILS DER KONTAKTFLÄCHEN ZWISCHEN BENACHBARTEN MAGNETEN
UNITARY MAGNET HAVING RECESSED SHAPES FOR FORMING PART OF CONTACT AREAS BETWEEN ADJACENT MAGNETS

(30) Priorité: 26.01.2018 FR 1800085
(43) Date de publication de la demande: 02.12.2020
(73) Titulaire: Whylot, 46100 Cambes (FR)
(72) Inventeur: RAVAUD, Romain, 46240 Labastide-murat (FR); MAYEUR, Loic, 12300 Saint-santin (FR); MIHAILA, Vasile, 46100 Figeac (FR)
(86) Numéro de dépôt international: PCT/IB2019/050424
(87) Numéro de publication internationale: WO 2019/145832

(56) Documents cités:
- CN-A- 101 162 638
- DE-A1-102008 055 893
- US-A1- 2004 263 012

## Description

La présente invention concerne un aimant unitaire présentant des formes en retrait destinées à faire partie de zones de contact entre des aimants unitaires adjacents et une structure d'aimant à plusieurs aimants unitaires adjacents. L'invention concerne aussi un actionneur électromagnétique comportant une ou plusieurs de telles structures d'aimant.

La présente invention trouve une application avantageuse mais non limitative pour un actionneur électromagnétique délivrant une forte puissance avec une vitesse de rotation du rotor élevée, ce qui est obtenu par l'utilisation d'une ou de structures d'aimant selon la présente invention. Un tel actionneur électromagnétique peut être utilisé par exemple dans un véhicule automobile totalement électrique ou hybride.

Avantageusement mais non limitativement, l'actionneur peut être un actionneur rotatif pouvant comprendre au moins un rotor encadré par deux stators, ces éléments pouvant se superposer les uns par rapport aux autres en étant séparés par au moins un entrefer sur un même arbre.

Dans des applications à haute vitesse, il est nécessaire d'avoir non seulement un système compact rendu possible par la réduction de la masse et de l'encombrement de l'actionneur électromagnétique pour un rendement optimal, mais également une très bonne tenue mécanique de la partie tournante ou en translation, c'est-à-dire le rotor ou l'élément en translation linéaire, afin d'améliorer la fiabilité du système.

Dans des applications à haute vitesse, il est nécessaire de réduire les pertes pour un rendement optimal. Dans des applications automobiles, la miniaturisation est de plus en plus recherchée. Pour cela, il est important d'avoir un système compact rendu possible par la réduction de la masse et de l'encombrement de l'actionneur, mais également une très bonne tenue mécanique de la partie en déplacement, afin d'améliorer la fiabilité du système.

Pour un actionneur électromagnétique à flux axial, comme exemple non limitatif de la présente invention, le rotor comporte un corps sous forme d'un disque présentant deux faces circulaires reliées par une épaisseur, le disque étant délimité entre une couronne externe et une périphérie interne délimitant un évidement pour un arbre de rotation.

Au moins deux aimants permanents sont appliqués contre au moins une des deux faces circulaires du corps dite face de support. Pour un rotor mono-entrefer destiné à être associé à un stator, une seule face circulaire du corps porte des aimants tandis que, pour un rotor à deux entrefers avec un stator respectif, ce sont les deux faces qui portent des aimants.

Les aimants sont chacun maintenus sur la face ou leur face respective par des moyens de maintien, un intervalle étant laissé entre lesdits au moins deux aimants sur une même face.

Pour un actionneur électromagnétique à flux radial, le rotor comporte un corps cylindrique dont tout le pourtour porte des aimants.

Pour le stator ou chaque stator, ceux-ci portent des éléments de bobinage comprenant une dent portant une bobine, la dent étant encadrée sur chacun de ses côtés par une encoche, un fil métallique bon conducteur étant enroulé sur la dent pour former la bobine.

Quand la série ou les séries de bobinages sont alimentées électriquement, le rotor qui est solidarisé à l'arbre de sortie du moteur est soumis à un couple résultant du champ magnétique, le flux magnétique créé étant un flux axial pour une machine électromagnétique à flux axial et un flux radial pour une machine à flux radial.

Il est connu que les aimants peuvent se désaimanter quand soumis à des températures élevées.

Le document US-A-2011/0080065 décrit un rotor pour moteur à flux axial avec une pluralité de structures d'aimant disposées autour du rotor et composées de plusieurs aimants unitaires.

L'invention décrite dans ce document a été élaborée sur la constatation que les aimants permanents dans un tel moteur sont exposés à une température élevée en raison de la chaleur générée par les enroulements et ont une probabilité de démagnétisation par le champ démagnétisant des enroulements. Il existe donc une demande pour des aimants dans lesquels la force coercitive qui est un indice de résistance thermique et de résistance à la démagnétisation est supérieure à un certain niveau.

Lorsque le rotor tourne, des courants de Foucault circulent dans les aimants. Des moyens efficaces pour réduire les courants de Foucault consistent à diviser un corps magnétique pour interrompre le trajet du courant de Foucault. Alors que la division d'un corps d'aimant en plus petits morceaux conduit à une réduction plus importante des pertes par courants de Foucault, il devient nécessaire de prendre en compte des problèmes tels qu'une augmentation du coût de fabrication et une diminution du rendement.

Ce document propose que chacun des aimants unitaires divisés présente une force coercitive près de la surface de la pièce d'aimant plus élevée que celle à l'intérieur de l'aimant unitaire. Ceci est une mesure difficile à mettre en œuvre et coûteuse.

De plus, dans ce document, les aimants unitaires sont collés face contre face en étant sous forme de cubes, ce qui concourt à leur désaimantation et ne permet pas un échange de chaleur avec l'extérieur des aimants. Il s'est donc révélé qu'une telle disposition d'aimants unitaires sous forme de cubes collés les uns contre les autres ne renforçait pas la solidité d'une structure d'aimant composée de tels aimants unitaires.

Il a bien été prévu de disposer des aimants unitaires dans un maillage pour former une structure d'aimant mais ceci requiert un supplément de travail de disposition des aimants et une perte de place due aux mailles entre les aimants, la structure d'aimant contenant moins d'aimants unitaires et perdant ainsi en pouvoir d'aimantation.

Le document DE 10 2008 055 893 A1 divulgue une structure d'aimant en trois dimensions constituée d'une pluralité d'aimants unitaires.

Le document US-A-4 555 685 des aimants de grande taille. Ces aimants de grande taille sont de forme trapézoïdale mais ils ne sont pas réunis les uns aux autres pour former une structure d'aimant compacte.

Le document US-A-2004/263012 décrit des aimants de grande taille donc assimilables à des structures d'aimant. Ces aimants de grande taille ont des bords chanfreinés mais ils ne sont pas réunis les uns aux autres pour former une structure d'aimant compacte.

Le problème à la base de la présente invention est de concevoir une forme d'aimant unitaire et une structure d'aimant regroupant plusieurs aimants unitaires qui puissent combattre la démagnétisation de l'aimant unitaire tout en permettant une solidarisation résistante des aimants unitaires entre eux quand ces aimants unitaires forment la structure d'aimant pouvant supporter des vitesses de travail élevées tout en fournissant un champ magnétique puissant avec un maintien optimal des aimants dans leur support sans interposition d'éléments de séparation entre les aimants unitaires.

A cet effet la présente invention concerne une structure d'aimant en trois dimensions constituée d'une pluralité d'aimants unitaires, les aimants unitaires étant directement adjacents les uns aux autres, caractérisée en ce que chaque aimant unitaire comporte une première portion longitudinale présentant un contour extérieur portant des formes en retrait vers l'intérieur de l'aimant unitaire s'étendant sur au moins une partie d'une longueur de la première portion et/ou des formes en retrait s'étendant sur au moins une partie du pourtour de l'aimant unitaire transversalement à un axe longitudinal de l'aimant unitaire à proximité d'au moins une extrémité longitudinale de l'aimant unitaire, les aimants unitaires étant partiellement en contact entre eux au niveau des formes en retrait vers l'intérieur, les aimants étant collés entre eux par dépôt de colle sur au moins une portion des formes en retrait, la pluralité d'aimants unitaires réalisant un maillage d'aimants sans interposition d'éléments de maintien entre eux autres que la colle.

A proximité de l'extrémité longitudinale signifie que les formes en retrait transversales sont comprises entre une extrémité longitudinale de l'aimant unitaire et au plus à un point à égale distance de l'extrémité longitudinale de l'aimant unitaire et du milieu de la longueur de la première portion de l'aimant unitaire.

Ces formes en retrait longitudinales et/ou transversales sont placées dans des zones destinées à assurer le contact entre des aimants adjacents. Selon la présente invention, il n'est pas recherché à coller les aimants unitaires face contre face mais seulement localement sur les formes en retrait creusées dans chaque aimant unitaire et contenant alors de la colle, avantageusement sous forme de résine. Ces zones de contact peuvent être ponctuelles, linéaires ou en arc de cercle selon le contour extérieur des aimants unitaires. C'est la colle contenue dans ces formes en retrait qui forme l'adhésion de deux aimants unitaires adjacents.

On obtient ainsi comme aimants unitaires des " cristaux" associés entre eux qui ne sont pas liés sur toute la surface de facettes ou de faces longitudinales mais des couches de résine et de colle viennent se substituer par exemple à au moins une extrémité longitudinale car il n'y a pas de deuxième portion à cette extrémité longitudinale ou sur la grande base des facettes inclinées, par exemple à 45° et/ou sur les facettes longitudinales munies avantageusement sous forme de chanfreins respectivement transversaux et longitudinaux afin de construire un réseau maillé aux extrémités des plots poly-facettes avec des zones de contact entre aimants limitées.

Pour des aimants unitaires de forme ovoïde parfaite avec une première portion arrondie, le contact entre deux aimants unitaires adjacents est plus réduit en ne pouvant n'être que ponctuel et correspond sensiblement à un arc de cercle de dimension réduite entre les deux aimants unitaires. Il peut être creusé une strie à la dimension de l'arc de cercle de contact entre deux aimants unitaires adjacents pour recevoir de la colle, avantageusement sous forme de résine.

Avantageusement, les formes en retrait sont des cavités ou des chanfreins longitudinaux et/ou transversaux à l'aimant unitaire creusés dans le contour extérieur de la première portion de l'aimant unitaire. Ces cavités ou chanfreins remplis de colle sont destinés à former les zones de contact entre deux aimants unitaires adjacents. Un aimant unitaire peut être associé à de multiples aimants adjacents.

Avantageusement, la première portion et les chanfreins longitudinaux s'étendent sur toute une longueur de chaque aimant unitaire.

Avantageusement, la première portion formant corps de chaque aimant unitaire est de forme polygonale en présentant des facettes longitudinales ou de forme cylindrique de section circulaire ou ovalisée.

Avantageusement, quand la première portion est de forme polygonale en présentant des facettes longitudinales, chaque chanfrein sépare deux facettes longitudinales de la première portion. Pour une forme polygonale, ce sont de préférence les arrêtes longitudinales qui vont porter des chanfreins longitudinaux.

Avantageusement, chaque chanfrein présente une profondeur variant dans la longueur de chaque aimant unitaire. Ceci permet d'avoir une épaisseur de colle qui n'est pas constant tout le long du chanfrein.

Avantageusement, chaque aimant unitaire présente au moins une deuxième portion à une extrémité longitudinale de l'aimant unitaire en prolongement de la première portion, ladite au moins une deuxième portion pointant vers une extrémité longitudinale associée de l'aimant en diminuant de section en se rapprochant de l'extrémité longitudinale.

En considérant un aimant unitaire en tant qu'élément élémentaire sous forme de plot, la forme idéale de ce plot est un ellipsoïde de révolution symétrique aussi appelé forme ovoïde, approximativement une sphère aplatie, qui de par sa topologie est difficile à désaimanter car son champ magnétique relatif à l'aimantation est informe. Il n'y a pas de champ tournant dans les coins. A partir ce constat, une démarche inventive préférentielle de la présente invention est de constituer un maillage d'aimants unitaires se rapprochant le plus possible de l'ellipsoïde de révolution.

Plusieurs modes de réalisation sont possibles et la forme ovoïde de chaque aimant unitaire peut être plus ou moins parfaite en présentant une portion d'extrémité de forme arrondie convexe à une extrémité longitudinale ou aux deux extrémités longitudinales.

Une forme ovoïde relativement parfaite avec deux extrémités longitudinales de forme convexe est optimale mais difficile à obtenir par usinage. Par contre c'est la forme idéale pour combattre une désaimantation de l'aimant unitaire.

En alternative, un aimant unitaire basé sur une structure poly-facettes avec une première portion dite de corps avec des facettes longitudinales et au moins une portion d'extrémité avec des facettes inclinées dont les angles sont compris entre 0 et 45° peut aussi être envisagé en permettant d'augmenter le champ magnétique relatif à l'aimantation tout en conservant des faces actives importantes aux extrémités des aimants unitaires sous forme de plots.

Entre ces deux formes de réalisation de nombreuses autres formes s'approchant plus ou moins d'une forme ovoïde sont aussi possibles.

Avantageusement, chaque aimant unitaire présente un contour extérieur au moins partiellement ovoïde avec la première portion formant corps de l'aimant unitaire présentant une plus grande section et s'étendant sur une plus grande longueur de l'aimant unitaire que ladite au moins une deuxième portion.

Il est ainsi obtenu un aimant unitaire avec une forme ovoïde résistante à la désaimantation de l'aimant. Un tel aimant unitaire est cependant plus difficile à usiner qu'un aimant unitaire de forme polygonale avec au moins une extrémité longitudinale arrondie de forme convexe pour se rapprocher d'une forme ovoïde.

Avantageusement, ladite au moins une deuxième portion d'extrémité longitudinale est bombée en étant de forme convexe, un sommet de la forme convexe de la deuxième portion d'extrémité longitudinale réalisant l'extrémité longitudinale associée de chaque aimant unitaire. Ceci permet d'obtenir une forme se rapprochant au moins à une extrémité longitudinale d'une forme ovoïde.

Avantageusement, ladite au moins une deuxième portion d'extrémité longitudinale se termine à son extrémité longitudinale associée par une facette médiane formant l'extrémité longitudinale. L'extrémité longitudinale est alors tronquée et relativement plane.

Avantageusement, ladite au moins une deuxième portion d'extrémité longitudinale comprend des facettes latérales inclinées vers un axe longitudinal de chaque aimant unitaire en s'approchant de l'extrémité longitudinale associée de l'aimant, les facettes latérales inclinées s'étendant entre une grande base reliée à la première portion formant corps de l'aimant et une petite base formant une extrémité longitudinale de l'aimant. Cette forme de réalisation est plus aisée à réaliser qu'une forme ovoïde parfaite.

Avantageusement, les facettes latérales inclinées sont bombées en étant convexes. Cela permet de rapprocher la forme de réalisation présentant des facettes d'une forme ovoïde.

Avantageusement, les facettes latérales inclinées de ladite au moins une deuxième portion présentent la même largeur que les facettes longitudinales de la première portion, une facette inclinée étant mise bout à bout avec une facette longitudinale respective. Les facettes latérales inclinées prolongent alors les facettes longitudinales.

Avantageusement, la grande base de chaque facette inclinée est creusée au moins partiellement d'un chanfrein transversal en tant que forme en retrait.

Avantageusement, chaque extrémité longitudinale de chaque aimant comprend une deuxième portion d'extrémité longitudinale. La forme ovoïde est alors garantie sur les deux extrémités longitudinales de l'aimant unitaire.

Avantageusement, quand les formes longitudinales et/ou transversales en retrait sont des chanfreins longitudinaux et/ou transversaux à l'aimant unitaire creusés dans le contour extérieur de l'aimant, le dépôt de colle concerne exclusivement les chanfreins longitudinaux et/ou transversaux des aimants unitaires.

Avantageusement, la grande base de chaque facette inclinée étant creusée au moins partiellement d'un chanfrein transversal en tant que forme en retrait transversal sur ladite au moins une deuxième portion, le dépôt de colle concerne exclusivement les grandes bases des aimants unitaires pour ladite au moins une deuxième portion.

L'invention concerne un actionneur électromagnétique linéaire ou rotatif, caractérisé en ce qu'il comprend une telle structure d'aimant unitaire ou plusieurs de telles structures d'aimant, la ou les structures d'aimant faisant partie d'un rotor rotatif autour de son centre, la ou les structures d'aimant étant disposées concentriquement au centre du rotor.

Avantageusement, quand unitaire, la structure d'aimant forme un unique aimant s'étendant sur l'actionneur ou, quand multiples, les structures d'aimant sont des pavés successifs formant des pôles d'aimant successifs alternés.

L'invention concerne un procédé de fabrication d'une telle structure d'aimant, caractérisé en ce qu'il comprend les étapes suivantes :
- découpe dans une tuile aimantée présentant une longueur, une largeur et une épaisseur formant trois dimensions de la tuile de plusieurs aimants unitaires selon les trois dimensions de la tuile aimantée,
- détermination de zones de contact partiel sur chaque aimant unitaire avec chaque aimant qui lui est adjacent quand les aimants sont disposés les uns à côté des autres,
- réalisation aux zones de contact de formes en retrait vers l'intérieur de l'aimant unitaire s'étendant sur au moins une partie d'une longueur de la première portion et/ou transversalement à la première portion,
- collage de chaque aimant unitaire par dépôt d'une résine pour chaque aimant unitaire uniquement sur les zones de contact partiel déterminées,
- positionnement des aimants unitaires ainsi collés de manière adjacente les uns aux autres, un contact partiel entre deux aimants unitaires adjacents étant établi aux zones de contact.

La démarche à la base de la présente invention est donc que la tenue entre les aimants unitaires soit assurée sans avoir besoin d'un maillage logeant les aimants unitaires individuellement, ce qui représente un gain de place et permet de loger plus d'aimants unitaires par structure d'aimant.

De plus, il n'est plus assuré un contact face contre face des aimants unitaires comme le proposait l'état de la technique mais un contact sensiblement ponctuel, linéaire ou en arc de cercle, ce qui permet d'augmenter le champ magnétique relatif à l'aimantation et d'éviter de doper les aimants tout en évitant les courants de Foucault élémentaires. Il est ainsi possible de rassembler un nombre total d'aimants unitaires très élevé dans une structure d'aimant, par exemple de l'ordre de 200 à 300 aimants unitaires par structure d'aimant, comparé au plus à une vingtaine dans une structure d'aimant selon l'état de la technique.

Au final, il est possible d'envisager des aimants unitaires adoptant différentes configurations tendant plus ou moins vers une forme ovoïde parfaite.

Avantageusement, il est procédé à une injection d'une couche de composite autour des aimants unitaires ainsi mis en contact et collés pour leur enrobage. Ceci permet d'obtenir une structure d'aimant compact en remplissant les interstices entre aimants unitaires.

D'autres caractéristiques, buts et avantages de la présente invention apparaîtront à la lecture de la description détaillée qui va suivre et au regard des dessins annexés donnés à titre d'exemples non limitatifs et sur lesquels :

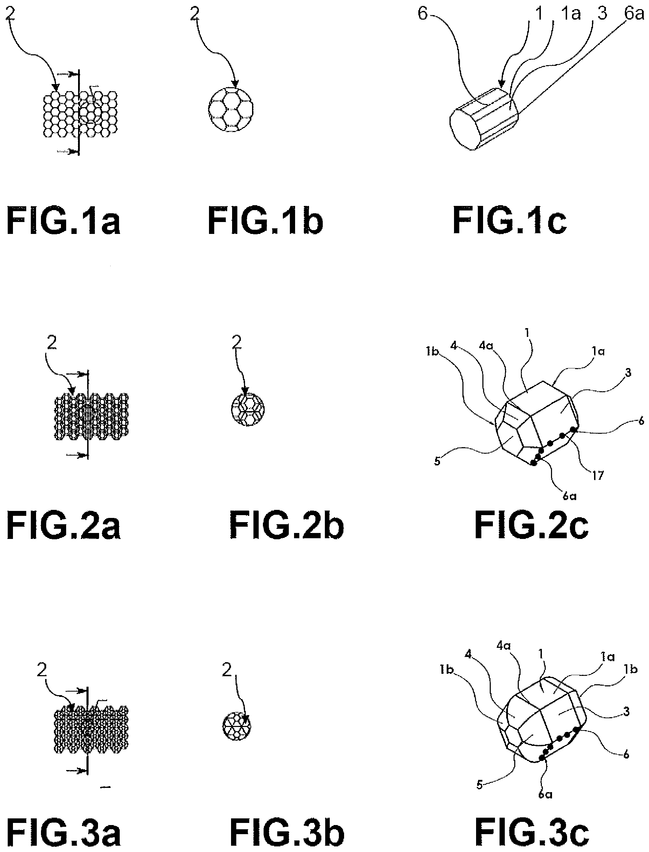

- les figures 1a, 1b et 1c sont des représentations schématiques respectivement d'une vue de face d'une structure d'aimant contenant plusieurs aimants unitaires, d'une vue agrandie de cette structure d'aimant et d'une vue en perspective d'un aimant unitaire sous forme d'un plot allongé de forme polygonale selon une première forme de réalisation de la présente invention,
- les figures 2a, 2b et 2c sont des représentations schématiques respectivement d'une vue de face d'une structure d'aimant contenant plusieurs aimants unitaires, d'une vue agrandie de cette structure d'aimant et d'une vue en perspective d'un aimant unitaire sous forme d'un plot allongé selon une deuxième forme de réalisation de la présente invention, l'aimant unitaire comportant au moins une portion d'extrémité longitudinale de forme ovoïde avec des facettes inclinées,
- les figures 3a, 3b et 3c sont des représentations schématiques respectivement d'une vue de face d'une structure d'aimant contenant plusieurs aimants unitaires, d'une vue agrandie de cette structure d'aimant et d'une vue en perspective d'un aimant unitaire sous forme d'un plot allongé selon une troisième forme de réalisation de la présente invention, l'aimant unitaire comportant au moins une portion d'extrémité longitudinale de forme ovoïde avec des facettes inclinées, les facettes inclinées étant bombées,

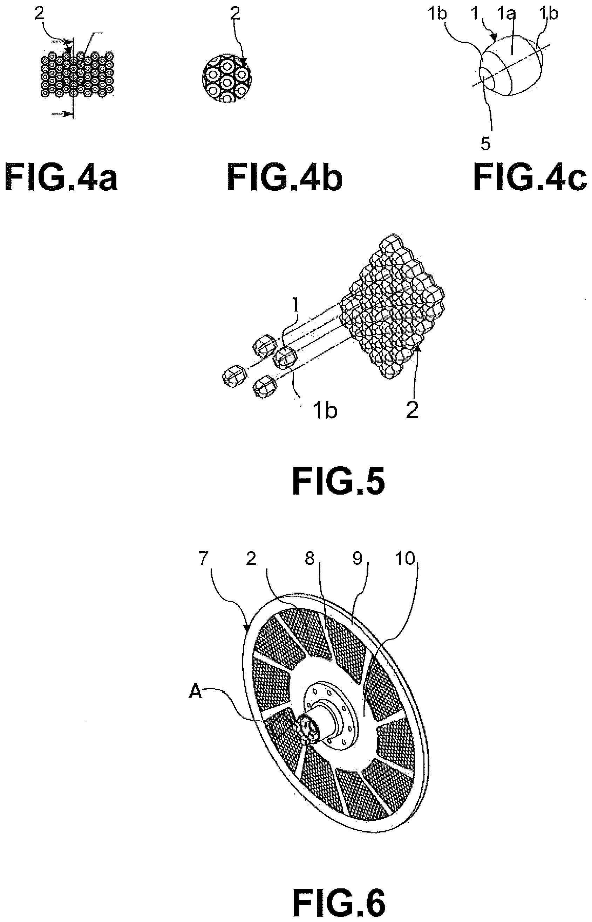

- les figures 4a, 4b et 4c sont des représentations schématiques respectivement d'une vue de face d'une structure d'aimant contenant plusieurs aimants unitaires, d'une vue agrandie de cette structure d'aimant et d'une vue en perspective d'un aimant unitaire sous forme d'un plot allongé selon une quatrième forme de réalisation de la présente invention, l'aimant unitaire présentant une forme ovoïde sensiblement parfaite avec deux portions d'extrémité longitudinale bombées,
- la figure 5 est une représentation schématique d'une vue en perspective d'une structure d'aimant selon la présente invention logeant des aimants unitaires selon la deuxième forme de réalisation, des aimants unitaires étant montrés à distance de la structure d'aimant pour être mieux visibles,
- la figure 6 est une représentation schématique d'une vue en perspective d'un rotor comprenant plusieurs structures d'aimant, le rotor faisant partie d'un actionneur électromagnétique selon la présente invention, la partie encadrée A à cette figure faisant référence à la figure 5.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différentes pièces ne sont pas représentatives de la réalité.

Dans ce qui va suivre, il sera référencé un seul aimant unitaire, une seule structure d'aimant, une seule facette longitudinale, une seule facette inclinée et un seul chanfrein longitudinal ou transversal mais ce qui est énoncé pour un de ces éléments référencés est applicable pour tous les éléments similaires.

Être transversal à l'aimant unitaire signifie être dans un plan perpendiculaire à un axe longitudinal de l'aimant unitaire allongé présentant une forme de plot.

En se référant à toutes les figures et notamment aux figures 1a à 1c, 2a à 2c, 3a à 3c et 4a à 4c, la présente invention concerne un aimant unitaire 1 de forme allongée pouvant être considéré comme un plot, sa longueur étant notoirement plus grande que sa largeur.

L'aimant unitaire 1 présente une première portion 1a longitudinale présentant un contour extérieur portant des formes en retrait 6 vers l'intérieur de l'aimant unitaire 1 s'étendant sur au moins une partie d'une longueur de la première portion 1a ainsi que des formes en retrait 6a vers l'intérieur de l'aimant unitaire 1 s'étendant sur au moins une portion de pourtour de l'aimant unitaire transversalement à un axe longitudinal de l'aimant unitaire 1.

Aux figures 2c et 3c, les formes en retrait sont dessinées en tant que points avec un seul point référencée 6 ou 6a par arrête 17, ce qui n'est pas limitatif, les formes en retrait étant de préférence des chanfreins ou des rainures creusés à l'intérieure d'une arrête respective 17.

Les formes en retrait 6, 6a peuvent être un chanfrein ou une rainure s'étendant dans la longueur d'une arrête 17 d'une facette quand l'aimant unitaire 1 est de forme polygonale sur au moins une partie de cette longueur. Ces formes en retrait 6, 6a peuvent être des cavités séparées les unes des autres dans la longueur d'une arrête d'une facette ou des chanfreins formant un ensemble discontinu de chanfreins espacés les uns après les autres dans la longueur d'une arrête. La profondeur des formes en retrait 6, 6a est suffisante pour retenir de la colle en leur intérieur.

L'aimant unitaire 1 peut aussi présenter au moins une deuxième portion 1b longitudinale prolongeant la première portion 1a longitudinale vers une extrémité longitudinale de l'aimant unitaire 1 et des formes en retrait transversales 6a peuvent être prévues sur cette ou ces deuxièmes portions 1b longitudinales en alternative ou en complément des formes en retrait longitudinales 6 de la première portion 1a, avantageusement à la jonction des première 1a et deuxième portions 1b.

Comme montré à la figure 1c, les formes en retrait transversales 6a peuvent être aussi présentes sur la première portion 1a quand l'aimant unitaire 1 ne présente pas de deuxième portion 1b, ceci aux extrémités longitudinales de l'aimant unitaire 1.

Ainsi, quand il n'y a pas de deuxième portion 1b, des formes en retrait peuvent s'étendre sur au moins une partie du pourtour de l'aimant unitaire 1 transversalement à un axe longitudinal de l'aimant unitaire 1 juste à l'extrémité longitudinale de l'aimant unitaire 1, comme cela peut être le cas à la figure 1c.

Ces formes en retrait 6, 6a peuvent être des chanfreins longitudinaux 6 et/ou transversaux 6a à l'aimant unitaire 1 creusés dans le contour extérieur de la première portion 1a de l'aimant unitaire 1, les formes en retrait transversales 6a pouvant être disposées à la jonction des première 1a et deuxième portions 1b.

A la figure 1c, l'aimant unitaire 1 comprend une seule première portion 1a sans deuxième portion 1b d'extrémité. La première portion 1a est polygonale en présentant des facettes longitudinales 3. Les forme en retrait longitudinales 6, avantageusement des chanfreins 6, peuvent être creusées aux arrêtes 17 longitudinales entre deux facettes longitudinales 3 et les formes en retrait transversales 6a peuvent être creusées à au moins une des deux extrémités longitudinales de l'aimant unitaire 1.

Il s'ensuit que la première portion 1a et les chanfreins longitudinaux 6 peuvent s'étendre sur toute une longueur de l'aimant. Chaque chanfrein longitudinal 6 peut ainsi séparer deux facettes longitudinales 3 de la première portion 1a.

A la figure 2c, l'aimant unitaire 1 comprend une seule deuxième portion 1b d'extrémité. Les première 1a et deuxième portions 1b de l'aimant unitaire 1 comprennent chacune des facettes, des facettes longitudinales 3 pour la première portion 1a et des facettes inclinées 4 vers l'extrémité longitudinale associée à la deuxième portion 1b.

Les formes en retrait longitudinales 6, avantageusement des chanfreins longitudinaux 6, peuvent être creusées aux arrêtes 17 longitudinales entre deux facettes longitudinales 3 de la première portion 1a et/ou les formes en retrait transversales 6a, avantageusement des chanfreins transversaux 6a, peuvent être creusées sur une grande base 4a des facettes inclinées 4 de la deuxième portion 1b s'étendant de la grande base 4a vers une petite base formant l'extrémité longitudinale associée de l'aimant unitaire 1.

A la figure 3c, l'aimant unitaire 1 comprend deux deuxièmes portions 1b d'extrémité respectivement pour une extrémité longitudinale de l'aimant unitaire 1. Les première 1a et deuxième portions 1b de l'aimant unitaire 1 comprennent chacune des facettes, des facettes longitudinales 3 pour la première portion 1a et des facettes inclinées 4 vers l'extrémité longitudinale associée à la deuxième portion 1b respective. Dans ce mode de réalisation, les facettes inclinées 4 sont bombées.

Les formes en retrait longitudinales 6, avantageusement des chanfreins longitudinaux 6, peuvent être creusées aux arrêtes 17 longitudinales entre deux facettes longitudinales 3 de la première portion 1a et/ou les formes en retrait transversales 6a, avantageusement des chanfreins transversaux 6a, peuvent être creusées sur une grande base 4a des facettes inclinées 4 de la deuxième portion 1b.

A la figure 4c, l'aimant unitaire 1 présente une forme ovoïde presque parfaite avec une première portion 1a et deux deuxièmes portions 1b d'extrémité arrondies et de forme convexe. Le contact entre deux aimants unitaires 1 adjacents et ovoïde est sensiblement ponctuel ou s'étend selon un arc de cercle limité.

Dans ce cas, l'aimant unitaire 1 peut présenter un contour extérieur au moins partiellement ovoïde avec la première portion 1a formant corps de l'aimant unitaire 1 présentant une plus grande section et s'étendant sur une plus grande longueur de l'aimant unitaire 1 que ladite au moins une deuxième portion 1b, à la figure 4c deux deuxièmes portions 1b dont une à chacune des deux extrémités longitudinales de l'aimant unitaire 1.

Les formes en retrait, avantageusement des chanfreins, peuvent être creusées à la zone de contact réduite entre deux aimants unitaires 1 ovoïdes adjacents en présentant une forme en arc de cercle.

Aux figures 2c et 3c, les formes en retrait transversales 6a qui s'étendent sur au moins une partie du pourtour de l'aimant unitaire 1 transversalement à un axe longitudinal de l'aimant unitaire 1 peuvent être positionnées à proximité d'au moins une extrémité longitudinale de l'aimant unitaire 1. Il peut y avoir une forme en retrait transversale 6a à proximité de chacune des extrémités longitudinales de l'aimant unitaire 1.

Ce positionnement peut se faire juste à l'extrémité longitudinale quand l'aimant unitaire 1 ne comprend seulement qu'une première portion 1a comme montré à la figure 1c ou à la jonction de la première portion 1a avec au moins une deuxième portion 1b, comme montré aux figures 2c et 3c. Un positionnement à proximité d'au moins une extrémité longitudinale de l'aimant unitaire 1 couvre ces deux positions et toutes les positions intermédiaires.

Comme une deuxième portion 1b est sensiblement deux fois moins grandes qu'une première portion 1a ou même encore plus petite, à proximité de l'extrémité longitudinale signifie que les formes en retrait transversales 6a sont comprises entre une extrémité longitudinale de l'aimant unitaire 1 et au plus un point à égale distance de l'extrémité longitudinale de l'aimant unitaire et du milieu de la longueur de la première portion 1a de l'aimant unitaire 1.

Comme montré à la figure 1c, la première portion 1a formant corps de l'aimant unitaire 1 peut être de forme polygonale en présentant des facettes longitudinales 3. En alternative, la première portion 1a de l'aimant unitaire 1 peut aussi être de forme cylindrique de section circulaire ou ovalisée. Dans ce cas, il est possible de munir aussi la forme cylindrique plus ou moins exacte d'au moins un chanfrein longitudinal 6 dans le sens de sa longueur et/ou d'au moins un chanfrein transversal 6a à au moins une des extrémités longitudinales de l'aimant unitaire 1.

Chaque chanfrein 6, 6a peut présenter une profondeur variant dans la longueur de l'aimant. Pour un chanfrein longitudinal 6, cette profondeur peut être plus grande vers une extrémité longitudinale ou au contraire plus grande dans la portion médiane longitudinale de l'aimant unitaire 1.

Comme précédemment mentionné et montré aux figures 2c, 3c et 4c, l'aimant unitaire 1 peut présenter au moins une deuxième portion 1b à une extrémité longitudinale de l'aimant unitaire 1 en prolongement de la première portion 1a. Il peut y avoir aussi deux deuxièmes portions 1b avec une deuxième portion 1b respectivement à une extrémité longitudinale de l'aimant unitaire 1.

La ou les deuxièmes portions 1b peuvent pointer vers une extrémité longitudinale associée de l'aimant en diminuant de section en se rapprochant de l'extrémité longitudinale.

Comme montré à la figure 3c et surtout à la figure 4c, la ou les deuxièmes portions 1b d'extrémité longitudinale peuvent être bombées en étant de forme convexe. Un sommet de la forme convexe de la ou de chaque deuxième portion 1b d'extrémité longitudinale réalise l'extrémité longitudinale associée de l'aimant unitaire 1.

Comme montré aux figures 2c, 3c et 4c, la ou les deuxièmes portions 1b d'extrémité longitudinale peuvent se terminer à leur extrémité longitudinale associée par une facette médiane 5 formant l'extrémité longitudinale. A la figure 4c, pour la forme ovoïde, cette facette médiane 5 formant l'extrémité longitudinale est cependant bombée et n'est qu'optionnelle.

Comme montré aux figures 2c et 3c, la ou les deuxièmes portions 1b d'extrémité longitudinale peuvent comprendre des facettes latérales inclinées 4 vers un axe longitudinal de l'aimant 1 en s'approchant de l'extrémité longitudinale associée de l'aimant.

Ces facettes latérales inclinées 4 peuvent s'étendre entre une grande base 4a reliée à la première portion 1a formant corps de l'aimant de l'aimant et une petite base formant une extrémité longitudinale de l'aimant. C'est une telle grande base 4a qui peut porter des formes en retrait transversales 6a en alternative ou en complément des formes en retrait longitudinales 6 portées par la première portion 1a.

Comme montré à la figure 3c, les facettes latérales inclinées 4 peuvent être bombées en étant convexes.

Comme montré aux figures 2c et 3c, les facettes latérales inclinées 4 de la ou des deuxièmes portions 1b peuvent présenter la même largeur que les facettes longitudinales de la première portion 1a, une facette inclinée 4 étant mise bout à bout avec une facette longitudinale 3 respective.

Comme montré le plus visiblement aux figures 3c et 4c, chaque extrémité longitudinale de l'aimant unitaire 1 peut comprendre une deuxième portion 1b d'extrémité longitudinale.

En se référant plus particulièrement aux figures 1a et 1b, 2a et 2b, 3a et 3b, 4a et 4b et aux figures 5 et 6, l'invention concerne une structure d'aimant 2 en trois dimensions constituée d'une pluralité d'aimants unitaires 1, chaque aimant unitaire étant tel que précédemment mentionné.

Dans cette structure d'aimant 2, les aimants unitaires 1 sont directement adjacents les uns aux autres en étant partiellement en contact au niveau des formes en retrait longitudinales 6 et/ou transversales 6a vers l'intérieur. Les aimants unitaires 1 sont collés par dépôt de colle sur au moins une portion des formes en retrait 6, 6a. La pluralité d'aimants unitaires 1 réalise un maillage d'aimants sans interposition d'éléments de maintien entre eux autres que la colle, les aimants unitaires 1 étant en contact direct entre aimants adjacents. Ceci est particulièrement bien visible à la figure 5 et aux figures agrandies 1b, 2b, 3b et 4b. Les motifs faits par les aimants unitaires 1 sont différents selon la conception de ces aimants unitaires 1.

Quand les formes longitudinales en retrait sont des chanfreins longitudinaux 6 à l'aimant unitaire 1 creusés dans le contour extérieur de l'aimant sur la première portion 1a de l'aimant unitaire 1, le dépôt de colle concerne les chanfreins 6 des aimants unitaires 1.

Quand la grande base 4a de chaque facette inclinée est creusée au moins partiellement d'un chanfrein transversal 6a en tant que forme en retrait sur la ou les deuxièmes portions 1b, le dépôt de colle concerne exclusivement les grandes bases 4a des aimants unitaires 1 pour ladite au moins une deuxième portion 1b. Bien entendu pour des chanfreins longitudinaux 6 et transversaux 6a en association, ce sont ces deux types de chanfreins longitudinaux 6 et transversaux 6a qui reçoivent exclusivement le dépôt de colle.

Ceci veut dire que seules les formes en retrait longitudinaux 6 et transversaux 6a reçoivent de la colle et que donc le collage est ponctuel en étant limité aux formes en retrait.

Comme montré à la figure 6, l'invention concerne un actionneur électromagnétique linéaire ou rotatif avec une telle structure d'aimant 2 unitaire 1 ou plusieurs de telles structures d'aimant 2, la ou les structures d'aimant 2 faisant partie d'un rotor 7 rotatif autour de son centre, la ou les structures d'aimant 2 étant disposées concentriquement au centre du rotor 7.

L'actionneur montré à la figure 6 est à flux axial mais pourrait aussi bien être à flux radial.

La ou les structures d'aimant 2 peuvent être disposées concentriquement au centre du rotor 7, avantageusement séparées par des branches 8 dans le cas de plusieurs structures d'aimant 2 et encadrées d'une part par un moyeu 10 et une frette 9. Les branches 8 partent du moyeu 10 et se terminent à la frette 9.

Quand unitaire, la structure d'aimant 2 peut former un unique aimant s'étendant sur l'actionneur. Quand multiples, comme montré à la figure 6, les structures d'aimant 2 sont des pavés successifs formant des pôles d'aimant successifs alternés.

L'invention concerne enfin un procédé de fabrication d'une telle structure d'aimant 2. Le procédé comprend une étape de découpe dans une tuile aimantée présentant une longueur, une largeur et une épaisseur formant trois dimensions de la tuile, de plusieurs aimants unitaires 1 selon les trois dimensions de la tuile aimantée.

Le procédé comprend ensuite une étape de détermination de zones de contact partiel sur chaque aimant unitaire 1 avec chaque aimant qui lui est adjacent quand les aimants sont adjacents les uns aux autres. Ceci dépend du contour extérieur des aimants unitaires 1.

Il est procédé ensuite à la réalisation aux zones de contact de formes en retrait longitudinales 6 et/ou transversales 6a vers l'intérieur de l'aimant unitaire 1 s'étendant sur au moins une partie d'une longueur de la première portion 1a et/ou transversalement à la première portion 1a, par exemple sur la grande base 4a de facettes inclinées 4 de la deuxième portion 1b quand présente.

L'étape suivante est le collage de chaque aimant unitaire 1 par dépôt d'une résine pour chaque aimant unitaire 1 uniquement sur les zones de contact partiel déterminées. Collage signifie enduction ou dépôt de colle à cette étape du procédé.

Il est ensuite procédé au positionnement des aimants unitaires 1 ainsi collés de manière adjacente les uns aux autres, un contact partiel entre deux aimants unitaires 1 adjacents étant établi aux zones de contact.

Il peut être procédé à une injection d'une couche de composite autour des aimants unitaires 1 ainsi mis en contact et collés pour leur enrobage et densifier la structure d'aimant 2 ainsi créée.

## Revendications

1. Structure d'aimant (2) en trois dimensions constituée d'une pluralité d'aimants unitaires (1), les aimants unitaires (1) étant directement adjacents les uns aux autres, chaque aimant unitaire (1) comportant une première portion (1a) longitudinale présentant un contour extérieur portant des formes en retrait (6) vers l'intérieur de l'aimant unitaire (1) s'étendant sur au moins une partie d'une longueur de la première portion (1a) et/ou des formes en retrait (6a) s'étendant sur au moins une partie du pourtour de l'aimant unitaire (1) transversalement à un axe longitudinal de l'aimant unitaire (1) à proximité d'au moins une extrémité longitudinale de l'aimant unitaire (1),
**caractérisé en ce que**
les aimants unitaires (1) sont partiellement en contact entre eux au niveau des formes en retrait (6, 6a) vers l'intérieur, les aimants sont collés entre eux par dépôt de colle sur au moins une portion des formes en retrait (6, 6a), la pluralité d'aimants unitaires (1) réalise un maillage d'aimants sans interposition d'éléments de maintien entre eux autres que la colle.

2. Structure d'aimant (2) selon la revendication 1, dans laquelle les formes en retrait (6, 6a) des aimants unitaires (1) sont des cavités ou des chanfreins longitudinaux (6) et/ou transversaux (6a) à chaque aimant unitaire (1) creusés dans le contour extérieur de la première portion (1a) de l'aimant unitaire (1).

3. Structure d'aimant (2) selon la revendication précédente, dans laquelle la première portion (1a) et les chanfreins longitudinaux (6) des aimants unitaires (1) s'étendent sur toute une longueur de chaque aimant unitaire (1).

4. Structure d'aimant (2) selon l'une quelconque des deux revendications précédentes, dans laquelle la première portion (1a) formant corps de chaque aimant unitaire (1) est de forme polygonale en présentant des facettes longitudinales (3) ou de forme cylindrique de section circulaire ou ovalisée.

5. Structure d'aimant (2) selon la revendication précédente, dans laquelle, quand la première portion (1a) est de forme polygonale en présentant des facettes longitudinales (3), chaque chanfrein longitudinal (6) sépare deux facettes longitudinales (3) de la première portion (1a).

6. Structure d'aimant (2) selon l'une quelconque des revendications 2 à 5, dans laquelle chaque chanfrein longitudinal (6) présente une profondeur variant dans la longueur de chaque aimant unitaire (1).

7. Structure d'aimant (2) selon l'une quelconque des revendications précédentes, dans laquelle chaque aimant unitaire (1) présente au moins une deuxième portion (1b) à une extrémité longitudinale de l'aimant unitaire (1) en prolongement de la première portion (1a), ladite au moins une deuxième portion (1b) pointant vers une extrémité longitudinale associée de l'aimant en diminuant de section en se rapprochant de l'extrémité longitudinale.

8. Structure d'aimant (2) selon la revendication précédente, dans laquelle chaque aimant unitaire (1) présente un contour extérieur au moins partiellement ovoïde avec la première portion (1a) formant corps de l'aimant unitaire (1) présentant une plus grande section et s'étendant sur une plus grande longueur de l'aimant unitaire (1) que ladite au moins une deuxième portion (1b).

9. Structure d'aimant (2) selon la revendication précédente, dans laquelle ladite au moins une deuxième portion (1b) d'extrémité longitudinale de chaque aimant unitaire (1) est bombée en étant de forme convexe, un sommet de la forme convexe de la deuxième portion (1b) d'extrémité longitudinale réalisant l'extrémité longitudinale associée de l'aimant unitaire (1).

10. Structure d'aimant (2) selon la revendication précédente, dans laquelle ladite au moins une deuxième portion (1b) d'extrémité longitudinale de chaque aimant unitaire (1) se termine à son extrémité longitudinale associée par une facette médiane (5) formant l'extrémité longitudinale.

11. Structure d'aimant (2) selon la revendication 7, dans laquelle ladite au moins une deuxième portion (1b) d'extrémité longitudinale de chaque aimant unitaire (1) comprend des facettes latérales inclinées (4) vers un axe longitudinal de l'aimant en s'approchant de l'extrémité longitudinale associée de l'aimant unitaire (1), les facettes latérales inclinées (4) s'étendant entre une grande base (4a) reliée à la première portion (1a) formant corps de l'aimant de l'aimant et une petite base formant une extrémité longitudinale de l'aimant unitaire (1).

12. Structure d'aimant (2) selon la revendication précédente, dans laquelle les facettes latérales inclinées (4) de chaque aimant unitaire (1) sont bombées en étant convexes.

13. Structure d'aimant (2) selon la revendication 5 et l'une quelconque des revendications 11 à 12, dans laquelle les facettes latérales inclinées (4) de ladite au moins une deuxième portion (1b) de chaque aimant unitaire (1) présentent la même largeur que les facettes longitudinales de la première portion (1a), une facette inclinée (4) étant mise bout à bout avec une facette longitudinale (3) respective.

14. Structure d'aimant (2) selon l'une quelconque des revendications 11 à 13, dans laquelle la grande base (4a) de chaque facette inclinée est creusée au moins partiellement d'un chanfrein transversal (6a) en tant que forme en retrait.

15. Structure d'aimant (2) selon l'une quelconque des revendications 7 à 14 précédentes, dans laquelle chaque extrémité longitudinale de chaque aimant unitaire (1) comprend la deuxième portion (1b) d'extrémité longitudinale.

16. Structure d'aimant (2) selon la revendication précédente, dans laquelle, quand les formes longitudinales et/ou transversales en retrait sont des chanfreins longitudinaux (6) et/ou transversaux (6a) à l'aimant unitaire (1) creusés dans le contour extérieur de l'aimant unitaire (1), le dépôt de colle concerne exclusivement les chanfreins (6, 6a) des aimants unitaires (1).

17. Structure d'aimant (2) selon la revendication précédente et la revendication 14 dans laquelle, la grande base (4a) de chaque facette inclinée étant creusée au moins partiellement d'un chanfrein transversal (6a) en tant que forme en retrait transversale sur ladite au moins une deuxième portion (1b), le dépôt de colle concerne exclusivement les grandes bases (4a) des aimants unitaires (1) pour ladite au moins une deuxième portion (1b).

18. Actionneur électromagnétique linéaire ou rotatif, **caractérisé en ce qu'**il comprend une structure d'aimant (2) ou plusieurs structures d'aimant (2) selon l'une quelconque des revendications précédentes, la ou les structures d'aimant (2) faisant partie d'un rotor (7) rotatif autour de son centre, la ou les structures d'aimant (2) étant disposées concentriquement au centre du rotor (7).

19. Actionneur électromagnétique selon la revendication précédente, dans lequel, quand unitaire, la structure d'aimant (2) forme un unique aimant s'étendant sur l'actionneur ou, quand multiples, les structures d'aimant (2) sont des pavés successifs formant des pôles d'aimant successifs alternés.

20. Procédé de fabrication d'une structure d'aimant (2) selon l'une quelconque des revendications précédentes, **caractérisé en ce qu'**il comprend les étapes suivantes :
- découpe dans une tuile aimantée présentant une longueur, une largeur et une épaisseur formant trois dimensions de la tuile de plusieurs aimants unitaires (1) selon les trois dimensions de la tuile aimantée,
- détermination de zones de contact partiel sur chaque aimant unitaire (1) avec chaque aimant qui lui est adjacent quand les aimants sont disposés les uns à côté des autres,
- réalisation aux zones de contact de formes en retrait (6, 6a) vers l'intérieur de l'aimant unitaire (1) s'étendant sur au moins une partie d'une longueur de la première portion (1a) et/ou transversalement à la première portion (1a),
- collage de chaque aimant unitaire (1) par dépôt d'une résine pour chaque aimant unitaire (1) uniquement sur les zones de contact partiel déterminées,
- positionnement des aimants unitaires (1) ainsi collés de manière adjacente les uns aux autres, un contact partiel entre deux aimants unitaires (1) adjacents étant établi aux zones de contact.

21. Procédé selon la revendication précédente, dans lequel, il est procédé à une injection d'une couche de composite autour des aimants unitaires (1) ainsi mis en contact et collés pour leur enrobage.

## Patentansprüche

1. Magnetstruktur (2) in drei Dimensionen, bestehend aus einer Vielzahl von Einzelmagneten (1), wobei die Einzelmagnete (1) direkt aneinandergrenzen, wobei jeder Einzelmagnet (1) einen ersten Längsabschnitt (1a) umfasst, der eine Außenkontur aufweist, die zum Inneren des Einzelmagnets (1) zurückspringende Formen (6) trägt, die sich auf wenigstens einem Teil einer Länge des ersten Abschnitts (1a) erstrecken, und/oder zurückspringende Formen (6a), die sich auf wenigstens einem Teil des Umfangs des Einzelmagnets (1) quer zu einer Längsachse des Einzelmagnets (1) in der Nähe wenigstens eines Längsendes des Einzelmagnets (1) erstrecken, **dadurch gekennzeichnet, dass** die Einzelmagnete (1) auf Höhe der zum Inneren zurückspringenden Formen (6, 6a) untereinander teilweise in Kontakt sind, die Magneten untereinander durch Klebstoffauftrag auf wenigstens einem Abschnitt der zurückspringenden Formen (6, 6a) verklebt sind, die Vielzahl von Einzelmagneten (1) ein Magnetgeflecht ohne Einfügung von gegenseitigen Halteelementen, außer dem Klebstoff, bildet.

2. Magnetstruktur (2) nach Anspruch 1, wobei die zurückspringenden Formen (6, 6a) der Einzelmagnete (1) Vertiefungen oder Abschrägungen sind, die längs (6) und/oder quer (6a) an jedem Einzelmagnet (1) verlaufen und die in der Außenkontur des ersten Abschnitts (1a) des Einzelmagnets (1) ausgehöhlt sind.

3. Magnetstruktur (2) nach dem vorstehenden Anspruch, wobei sich der erste Abschnitt (1a) und die längs verlaufenden Abschrägungen (6) der Einzelmagnete (1) über eine gesamte Länge jedes Einzelmagnets (1) erstrecken.

4. Magnetstruktur (2) nach einem der zwei vorstehenden Ansprüche, wobei der erste Abschnitt (1a), der einen Körper jedes Einzelmagnets (1) bildet, vieleckig ist, indem er Längsfacetten (3) aufweist, oder zylindrisch mit einem kreisförmigen oder ovalen Querschnitt ist.

5. Magnetstruktur (2) nach dem vorstehenden Anspruch, wobei, wenn der erste Abschnitt (1a) vieleckig ist, indem er Längsfacetten (3) aufweist, jede längs verlaufende Abschrägung (6) zwei Längsfacetten (3) des ersten Abschnitts (1a) trennt.

6. Magnetstruktur (2) nach einem der Ansprüche 2 bis 5, wobei jede längs verlaufende Abschrägung (6) eine Tiefe aufweist, die in der Länge jedes Einzelmagnets (1) variiert.

7. Magnetstruktur (2) nach einem der vorstehenden Ansprüche, wobei jeder Einzelmagnet (1) wenigstens einen zweiten Abschnitt (1b) an einem Längsende des Einzelmagnets (1) in der Verlängerung des ersten Abschnitts (1a) aufweist, wobei wenigstens ein zweiter Abschnitt (1b) zu einem zugehörigen Längsende des Magnets zeigt, indem der Querschnitt bei zunehmender Annäherung an das Längsende abnimmt.

8. Magnetstruktur (2) nach dem vorstehenden Anspruch, wobei jeder Einzelmagnet (1) eine wenigstens teilweise eiförmige Außenkontur aufweist, wobei der erste Abschnitt (1a), der einen Körper des Einzelmagnets (1) bildet, einen größeren Querschnitt aufweist und sich über eine größere Länge des Einzelmagnets (1) erstreckt als der wenigstens eine zweite Abschnitt (1b).

9. Magnetstruktur (2) nach dem vorstehenden Anspruch, wobei der wenigstens eine zweite Abschnitt (1b) des Längsendes jedes Einzelmagnets (1) gewölbt ist, indem er konvexer Form ist, wobei ein Scheitelpunkt der konvexen Form des zweiten Abschnitts (1b) des Längsendes das zugehörige Längsende des Einzelmagnets (1) bildet.

10. Magnetstruktur (2) nach dem vorstehenden Anspruch, wobei der wenigstens eine zweite Abschnitt (1b) des Längsendes jedes Einzelmagnets (1) an seinem zugehörigen Längsende von einer Mittelfacette (5) abgeschlossen wird, die das Längsende bildet.

11. Magnetstruktur (2) nach Anspruch 7, wobei der wenigstens eine zweite Abschnitt (1b) des Längsendes jedes Einzelmagnets (1) Seitenfacetten (4) umfasst, die zu einer Längsachse des Magnets geneigt sind, indem sie sich dem zugehörigen Längsende des Einzelmagnets (1) annähern, wobei sich die geneigten Seitenfacetten (4) zwischen einer großen Basis (4a), die mit dem ersten Abschnitt (1a) verbunden ist, der einen Körper des Magnets bildet, und einer kleinen Basis erstrecken, die ein Längsende des Einzelmagnets (1) bildet.

12. Magnetstruktur (2) nach dem vorstehenden Anspruch, wobei die geneigten Seitenfacetten (4) jedes Einzelmagnets (1) gewölbt sind, indem sie konvex sind.

13. Magnetstruktur (2) nach Anspruch 5 und einem der Ansprüche 11 bis 12, wobei die geneigten Seitenfacetten (4) des wenigstens einen zweiten Abschnitts (1b) jedes Einzelmagnets (1) die gleiche Breite aufweisen wie die Längsfacetten des ersten Abschnitts (1a), wobei eine geneigte Facette (4) und eine jeweilige Längsfacette (3) aneinandergefügt sind.

14. Magnetstruktur (2) nach einem der Ansprüche 11 bis 13, wobei die große Basis (4a) jeder geneigten Facette wenigstens teilweise von einer quer verlaufenden Abschrägung (6a) als zurückspringende Form ausgehöhlt wird.

15. Magnetstruktur (2) nach einem der vorstehenden Ansprüche 7 bis 14, wobei jedes Längsende jedes Einzelmagnets (1) den zweiten Abschnitt (1b) eines Längsendes umfasst.

16. Magnetstruktur (2) nach dem vorstehenden Anspruch, wobei, wenn die längs und/oder quer verlaufenden, zurückspringenden Formen längs (6) und/oder quer (6a) verlaufende Abschrägungen am Einzelmagnet (1) sind, die in der Außenkontur des Einzelmagnets (1) ausgehöhlt sind, der Klebstoffauftrag ausschließlich die Abschrägungen (6, 6a) der Einzelmagnete (1) betrifft.

17. Magnetstruktur (2) nach dem vorstehenden Anspruch und Anspruch 14, wobei, da die große Basis (4a) jeder geneigten Facette wenigstens teilweise von einer quer verlaufenden Abschrägung (6a) als quer verlaufende, zurückspringende Form auf dem wenigstens einen zweiten Abschnitt (1b) ausgehöhlt wird, der Klebstoffauftrag ausschließlich die großen Basen (4a) der Einzelmagnete (1) für den wenigstens einen zweiten Abschnitt (1b) betrifft.

18. Elektromagnetischer Linear- oder Drehaktuator, **dadurch gekennzeichnet, dass** er eine Magnetstruktur (2) oder mehrere Magnetstrukturen (2) nach einem der vorstehenden Ansprüche umfasst, wobei die Magnetstruktur(en) (2) Teil eines Rotors (7) ist bzw. sind, der um seinen Mittelpunkt drehbar ist, wobei die Magnetstruktur(en) (2) konzentrisch zum Mittelpunkt des Rotors (7) angeordnet ist bzw. sind.

19. Elektromagnetischer Aktuator nach dem vorstehenden Anspruch, wobei, wenn einzeln, die Magnetstruktur (2) einen einzelnen Magnet bildet, der sich auf dem Aktuator erstreckt, oder wenn mehrfach, die Magnetstrukturen (2) aufeinanderfolgende Pflaster sind, die wechselnde, aufeinanderfolgende Magnetpole bilden.

20. Verfahren zur Herstellung einer Magnetstruktur (2) nach einem der vorstehenden Ansprüche, **dadurch gekennzeichnet, dass** es folgende Schritte umfasst:
- Zuschneiden, in einem Magnetziegel, der eine Länge, eine Breite und eine Dicke aufweist, die drei Dimensionen des Ziegels bilden, mehrerer Einzelmagnete (1) gemäß den drei Dimensionen des Magnetziegels,
- Bestimmen von Teilkontaktzonen auf jedem Einzelmagnet (1) mit jedem Magnet, der an ihn angrenzt, wenn die Magnete nebeneinander angeordnet sind,
- Bilden, an den Kontaktzonen, von zum Inneren des Einzelmagnets (1) zurückspringenden Formen (6, 6a), die sich auf wenigstens einem Teil einer Länge des ersten Abschnitts (1a) und/oder quer zum ersten Abschnitt (1a) erstrecken,
- Verkleben jedes Einzelmagnets (1) durch Auftragen eines Harzes für jeden Einzelmagnet (1) ausschließlich auf den bestimmten Teilkontaktzonen,
- Positionieren der so verklebten Einzelmagnete (1) in nebeneinanderliegender Art, wobei ein Teilkontakt zwischen zwei nebeneinanderliegenden Einzelmagneten (1) an den Kontaktzonen hergestellt wird.

21. Verfahren nach dem vorstehenden Anspruch, wobei eine Einspritzung einer Verbundstoffschicht um die so in Kontakt gebrachten und verklebten Einzelmagnete (1) für deren Überzug vorgenommen wird.

## Claims

1. A three-dimensional magnet structure (2) consisting of a plurality of unitary magnets (1), the unitary magnets (1) being directly adjacent to one another, each unitary magnet (1) including a first longitudinal portion (1a) having an external contour carrying shapes (6) set back towards the inside of the unitary magnet (1) extending over at least one portion of a length of the first portion (1a) and/or of the setback shapes (6a) extending over at least one portion of the perimeter of the unitary magnet (1) transversely to a longitudinal axis of the unitary magnet (1) in the vicinity of at least one longitudinal end of the unitary magnet (1), **characterised in that** the unitary magnets (1) are partially in contact with one another at the shapes (6, 6a) set back inwardly, the magnets are glued together by deposition of glue over at least one portion of the setback shapes (6, 6a), the plurality of unitary magnets (1) forms a meshing of magnets without any holding elements interposed therebetween besides the glue.

2. The magnet structure (2) according to claim 1, wherein the setback shapes (6, 6a) of the unitary magnets (1) consist of cavities or chamfers longitudinal (6) and/or transverse (6a) to each unitary magnet (1) dug into the external contour of the first portion (1a) of the unitary magnet (1).

3. The magnet structure (2) according to the preceding claim, wherein the first portion (1a) and the longitudinal chamfers (6) of the unitary magnets (1) extend over the entire length of each unitary magnet (1).

4. The magnet structure (2) according to any one of the two preceding claims, wherein the first portion (1a) forming the body of each unitary magnet (1) is polygonal shaped while having longitudinal facets (3) or cylindrical shaped with a circular or ovalised section.

5. The magnet structure (2) according to the preceding claim, wherein, when the first portion (1a) is polygonal shaped while having longitudinal facets (3), each longitudinal chamfer (6) separates two longitudinal facets (3) of the first portion (1a).

6. The magnet structure (2) according to any one of claims 2 to 5, wherein each longitudinal chamfer (6) has a depth varying over the length of each unitary magnet (1).

7. The magnet structure (2) according to any one of the preceding claims, wherein each unitary magnet (1) has at least one second portion (1b) at a longitudinal end of the unitary magnet (1) in the continuation of the first portion (1a), said at least one second portion (1b) pointing towards an associated longitudinal end of the magnet while having its section decreasing when getting close to the longitudinal end.

8. The magnet structure (2) according to the preceding claim, wherein each unitary magnet (1) has an external contour at least partially ovoid-like shaped with the first portion (1a) forming the body of the unitary magnet (1) having a larger section and extending over a larger length of the unitary magnet (1) than said at least one second portion (1b).

9. The magnet structure (2) according to the preceding claim, wherein said at least one second longitudinal end portion (1b) of each unitary magnet (1) is cambered while being convex shaped, an apex of the convex shape of the second longitudinal end portion (1b) forming the associated longitudinal end of the unitary magnet (1).

10. The magnet structure (2) according to the preceding claim, wherein said at least one second longitudinal end portion (1b) of each unitary magnet (1) terminates at its associated longitudinal end in a median facet (5) forming the longitudinal end.

11. The magnet structure (2) according to claim 7, wherein said at least one second longitudinal end portion (1b) of each unitary magnet (1) comprises lateral facets (4) inclined towards a longitudinal axis of the magnet when getting close to the associated longitudinal end of the unitary magnet (1), the inclined lateral facets (4) extending between a large base (4a) connected to the first portion (1a) forming the body of the magnet of the magnet and a small base forming a longitudinal end of the unitary magnet (1).

12. The magnet structure (2) according to the preceding claim, wherein the inclined lateral facets (4) of each unitary magnet (1) are cambered while being convex.

13. The magnet structure (2) according to claim 5 and any one of claims 11 to 12, wherein the inclined lateral facets (4) of said at least one second portion (1b) of each unitary magnet (1) have the same width as the longitudinal facets of the first portion (1a), an inclined facet (4) being put end-to-end with a respective longitudinal facet (3).

14. The magnet structure (2) according to any one of claims 11 to 13, wherein the large base (4a) of each inclined facet is dug at least partially with a transverse chamfer (6a) serving as a setback shape.

15. The magnet structure (2) according to any one of the preceding claims 7 to 14, wherein each longitudinal end of each unitary magnet (1) comprises the second longitudinal end portion (1b).

16. The magnet structure (2) according to the preceding claim, wherein, when the longitudinal and/or transverse setback shapes consist of chamfers longitudinal (6) and/or transverse (6a) to the unitary magnet (1) dug into the external contour of the unitary magnet (1), the glue deposition concerns exclusively the chamfers (6, 6a) of the unitary magnets (1).

17. The magnet structure (2) according to the preceding claim and claim 14, wherein, the large base (4a) of each inclined facet being dug at least partially with a transverse chamfer (6a) serving as a transverse setback shape on said at least one second portion (1b), the glue deposition concerns exclusively the large bases (4a) of the unitary magnets (1) for said at least one second portion (1b).

18. A linear or rotary electromagnetic actuator, **characterised in that** it comprises a magnet structure (2) or several magnet structures (2) according to any one of the preceding claims, the magnet structure(s) (2) belonging to a rotor (7) rotating about its centre, the magnet structure(s) (2) being disposed concentrically at the centre of the rotor (7).

19. The electromagnetic actuator according to the preceding claim, wherein, when it is unitary, the magnet structure (2) forms one single magnet extending over the actuator or, when they are multiple, the magnet structures (2) consist of successive blocks forming alternate successive magnet poles.

20. A method for manufacturing a magnet structure (2) according to any one of the preceding claims, **characterised in that** it comprises the following steps:
- cutting in a magnetised tile having a length, a width and a thickness forming three dimensions of the tile, several unitary magnets (1) according to the three dimensions of the magnetised tile,
- determination of partial contact areas on each unitary magnet (1) with each magnet adjacent thereto when the magnets are disposed next to one another,
- forming, at the contact areas, shapes (6, 6a) set back towards the inside of the unitary magnet (1) extending over at least one portion of a length of the first portion (1a) and/or transversely to the first portion (1a),
- gluing each unitary magnet (1) by deposition of a resin for each unitary magnet (1) only over the determined partial contact areas,
- positioning the unitary magnets (1) thus glued adjacently to one another, a partial contact between two adjacent unitary magnets (1) being established at the contact areas.

21. The method according to the preceding claim, wherein, it is proceeded with an injection of a composite layer around the unitary magnets (1) thus put into contact with one another and glued for coating thereof.
